# EUROPÄISCHE PATENTANMELDUNG

(11) **EP 3 009 703 A1**
(43) Veröffentlichungstag der Anmeldung: **20.04.2016**
(21) Anmeldenummer: 15002251.5
(22) Anmeldetag: 29.07.2015
(51) Int. Cl.: F16D 48/00

(54) **VERFAHREN ZUR STEUERUNG EINER AUTOMATISIERTEN KUPPLUNG EINES NUTZFAHRZEUGS UND STEUERUNG FÜR EINE AUTOMATISIERTE KUPPLUNG EINES NUTZFAHRZEUGS**

(30) Priorität: 11.10.2014 DE 102014015090
(71) Anmelder: MAN Truck & Bus AG, 80995 München (DE)
(72) Erfinder: HÖR, Marc, 82256 Fürstenfeldbruck (DE)

(57) **Zusammenfassung**

Die Erfindung betrifft ein Verfahren zur Steuerung einer automatisierten Kupplung eines Nutzfahrzeugs sowie eine Steuerung für eine automatisierte Kupplung eines Nutzfahrzeugs. Das Verfahren umfasst die Bestimmung und Überwachung einer Größe, aus der ein durch Schlupf erzeugter Energieeintrag in die Kupplung ableitbar ist; und die Einprägung einer Schwingung um das aktuell angeforderte Kupplungsmoment, falls die bestimmte und überwachte Größe einen vorbestimmten Wert erreicht.

## Beschreibung

Die Erfindung betrifft ein Verfahren zur Steuerung einer automatisierten Kupplung eines Nutzfahrzeugs sowie eine Steuerung für eine automatisierte Kupplung eines Nutzfahrzeugs.

Es ist allgemein der Fall, dass ein Kupplungseingriff ein Anpassen der Drehgeschwindigkeiten der jeweiligen Teile der Kupplung und der dazu gehörigen Elemente bedingt und dass die durch den Drehzahlunterschied repräsentierte Energie von der Seite des Kupplungsteils mit der höheren Drehzahl auf die Seite mit der niedrigen Drehzahl übertragen werden muss und/oder als Reibungshitze freigesetzt wird.

Bei Nutzfahrzeugen mit automatisierter Kupplung ist es möglich, das Fahrzeug nur durch Betätigung des Fahrpedals an einer Steigung zu halten, um ein Rückrollen zu vermeiden. Hierbei gibt der Fahrer ausreichend Gas, so dass kontinuierlich ein Moment durch die sich im Schlupf befindliche Kupplung zum Ausgleich der Hangabtriebskraft übertragen wird. Als Schlupf wird beispielsweise eine Differenz zwischen einer Motordrehzahl und einer Getriebeeingangsdrehzahl bezeichnet. Bei einem solchen Schlupfbetrieb zum Halten eines Nutzfahrzeugs am Berg ist die Kupplung einem sehr hohen Drehmoment ausgesetzt. Dadurch entstehen sehr hohe Energieeinträge in die Kupplung, die zu einer übermäßigen Kupplungsabnutzung führen können und die Lebensdauer der Kupplung stark beeinträchtigen können.

Das Problem eines sehr hohen Energieeintrags in die Kupplung kann ebenfalls beim Rangieren eines Nutzfahrzeugs mit schleifender Kupplung in der Ebene oder in einer Topographie mit geringen Steigungen entstehen, falls beispielsweise der Fahrer zum Rangieren keinen Rangiergang, sondern manuell einen großen Gang ausgewählt hat. In diesem Betrieb ist die Kupplung ebenfalls nie ganz geschlossen, so dass der dadurch bedingte Schlupfbetrieb sehr starke Hitze in der Kupplung freisetzen kann, wodurch die Lebensdauer der Kupplung wiederum stark reduziert werden kann.

Aus der Praxis ist es daher bekannt, zur Erhöhung der Lebensdauer der Kupplung den durch Schlupf bedingten Energieeintrag in die Kupplung zu überwachen und, falls der überwachte Energieeintrag einen kritischen Wert erreicht hat, eine Zwangsschließung der Kupplung einzuleiten. Hierdurch besteht das Risiko, dass der Motor abgewürgt wird, was aber zum Schutz der Kupplung in Kauf genommen wird.

Nachteilig an diesem aus dem Stand der Technik bekannten Ansatz ist das erwähnte Risiko des Abwürgens des Motors. Ferner ist dem Nutzfahrzeugfahrer oftmals nicht bewusst, dass sein Fahrverhalten (Halten des Fahrzeugs am Berg bzw. Rangieren mit großem Gang) negative Auswirkungen auf die Kupplungslebensdauer hat, so dass der Fahrer dann von dem Zwangsschließen der Kupplung und einem möglichen Abwürgen des Motors überrascht wird. Ferner besteht das Risiko, dass der Fahrer dieses unerwünschte Fahrverhalten wiederholt.

Es ist somit eine Aufgabe der Erfindung, ein verbessertes Verfahren zur Steuerung einer automatisierten Kupplung eines Nutzfahrzeugs bereitzustellen, mit dem Nachteile herkömmlicher Techniken vermieden werden können. Die Aufgabe der Erfindung ist es insbesondere, ein Verfahren zur Steuerung einer automatisierten Kupplung eines Nutzfahrzeugs bereitzustellen, das eine verbesserte Lebensdauer der Kupplung ermöglicht und den Fahrer auf zu vermeidende Fahrweisen, die zu einer hohen Lebensdauerbeeinträchtigung der Kupplung führen, hinweist.

Diese Aufgaben werden durch ein Verfahren zur Steuerung einer automatisierten Kupplung eines Nutzfahrzeugs gemäß den Merkmalen des Hauptanspruchs sowie durch eine Steuerung für eine automatisierte Kupplung eines Nutzfahrzeugs gemäß dem nebengeordneten Anspruch gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Das erfindungsgemäße Verfahren zur Steuerung einer automatisierten Kupplung eines Nutzfahrzeugs umfasst die Bestimmung und Überwachung einer Größe, aus der ein durch Schlupf erzeugter Energieeintrag in die Kupplung ableitbar ist. Diese bestimmte und überwachte Größe kann beispielsweise direkt der durch Schlupf erzeugte Energieeintrag in die Kupplung sein. Der durch Schlupf erzeugte Energieeintrag in die Kupplung kann in an sich bekannter Weise aus der Differenzdrehzahl (auch als Schlupfwert bezeichnet) der beiden Kupplungsteile, beispielsweise der Motordrehzahl und der Getriebeeingangsdrehzahl, multipliziert mit einem Ausdruck für das momentane Drehmoment und integriert über die Zeit ermittelt werden.

Alternativ oder zusätzlich kann als die bestimmte und überwachte Größe die Temperatur der Kupplung bestimmt und überwacht werden, die ebenfalls ein Maß für die in der Kupplung freigesetzte Wärmeenergie ist und die ebenfalls aus den vorgenannten Größen ermittelt werden würde.

Gemäß allgemeinen Gesichtspunkten der Erfindung wird ferner vorgeschlagen, eine Schwingung um das aktuell angeforderte Kupplungsmoment einzuprägen, falls die bestimmte und überwachte Größe einen vorbestimmten Schwellenwert überschreitet. Mit anderen Worten wird dem von der Kupplung als Drehmomentsteller aktuell angeforderten Kupplungsmoment eine Schwingung aufmoduliert, wodurch der Triebstrang zu Schwingungen angeregt wird. Die eingeprägte Schwingung führt dazu, dass die Kupplung gemäß der vorgegebenen Amplitude und Frequenz der eingeprägten Schwingung rund um das vom Fahrer aktuell geforderte Kupplungsmoment ein wenig auf- und ein wenig zugeht. Dies erzeugt ein rupfartiges Verhalten, das sog. Kupplungsrupfen, mit einem dadurch bedingten Momentenverlauf, der von der Kupplung in den Triebstrang eingeleitet wird.

Die auf diese Weise absichtlich erzeugten Triebstrangschwingungen werden von dem Fahrer des Nutzfahrzeugs im Fahrerhaus bemerkt und sind für diesen vergleichsweise unangenehm, da er hierdurch leicht "durchgeschüttelt" wird. Ein besonderer Vorzug der Erfindung liegt somit darin, dass der Fahrer rechtzeitig auf eine die Kupplungslebensdauer beeinträchtigende Betriebsweise des Nutzfahrzeugs hingewiesen wird, insbesondere auf eine Art und Weise, die der Fahrer im Vergleich zu einem visuellen Warnhinweis in der Regel nicht ignorieren wird. Vielmehr haben Versuche des Erfinders gezeigt, dass der Fahrer versuchen wird, die für ihn unangenehme Situation einer Triebstrangschwingung aufzulösen, beispielsweise durch Betätigen des Gaspedals oder umgekehrt durch Lösen des Gaspedals und Betätigen der Bremse. Es soll die Möglichkeit bestehen, dass schon vor Einleiten der Schwingungen eine Anzeige im Display erscheinen kann. Dies kann notwendig sein, dass der Fahrer nicht irrtümlich von einem Defekt des Fahrzeugs ausgeht.

Dadurch kann oftmals ein abruptes Zwangsschließen der Kupplung und das damit verbundene mögliche Abwürgen des Fahrzeugs vermieden werden.

Je nach Wahl der bestimmten und überwachten Größe kann als vorbestimmter Wert ein Energieschwellenwert oder ein Temperaturschwellenwert vorgegeben werden, dessen Überschreitung einen überdurchschnittlich hohen erfolgten Energieeintrag in die Kupplung anzeigt. Diese Schwellenwerte können fahrzeugspezifisch festgelegt werden, derart, dass ein Erreichen der Schwellenwerte dem Erreichen eines kritischen Betriebszustandes der Kupplung entspricht, bei dem ein fortgesetzter Energieeintrag in die Kupplung bzw. ein fortgesetzter Temperaturanstieg der Kupplung zu einer hohen Abnutzung und stark verminderter Kupplungslebensdauer führen kann.

Unter einer Überwachung der Größe wird verstanden, dass der zeitliche Verlauf dieser Größe bestimmt wird, so dass das Erreichen und Überschreiten des entsprechenden Schwellenwerts quasi in Echtzeit festgestellt werden kann. Beispielweise kann die Kupplungstemperatur oder der Energieeintrag in die Kupplung kontinuierlich berechnet werden.

Besonders vorteilhaft ist, wenn die Amplitude der eingeprägten Schwingung fahrsituationsabhängig parametrisiert ist. Beispielsweise kann bei einem Rangiervorgang eine Schwingung mit einer ersten Amplitude und beim Halten des Fahrzeugs an einer Steigung eine Schwingung mit einer zweiten Amplitude eingeprägt werden, wobei die erste Amplitude kleiner als die zweite Amplitude ist. Beim Halten des Nutzfahrzeugs an einer Steigung durch Betätigung des Gaspedals kann es schneller zu einer die Lebensdauer der Kupplung beeinträchtigenden Überhitzung kommen, so dass diese Parametrisierung den Vorteil bietet, dass die Unterschiede in der kupplungsschädigenden Betriebsweise des Fahrers auch durch die unterschiedlich starken Amplituden zum Ausdruck gebracht wird. Zusätzlich oder alternativ kann auch eine Frequenz der eingeprägten Schwingung fahrsituationsabhängig parametrisiert sein. Beispielsweise kann wiederum bei einem Rangiervorgang eine Schwingung mit einer ersten Frequenz und beim Halten des Fahrzeugs an einer Steigung eine Schwingung mit einer zweiten Frequenz eingeprägt sein, wobei die erste Frequenz kleiner als die zweite Frequenz ist.

Die eingeprägte Schwingung kann eine Sinusschwingung oder eine Halbsinusschwingung sein. Eine weitere Ausführungsvariante sieht vor, unmittelbar vor der Einprägung der Schwingung eine Reduzierung eines aktuellen Kupplungsmoments durchzuführen. Dadurch kann eine ungewollte Beschleunigung verhindert werden.

Ferner besteht die Möglichkeit, die Schwingung mit ansteigender Amplitude einzuprägen. Dadurch nimmt die Stärke der erzeugten Triebstrangschwingung zu und somit das für den Fahrer als unangenehm empfundene rupfähnliche Verhalten. Dadurch kann sofort mit Einsetzen der eingeprägten Schwingung eine Hinweisfunktion realisiert werden und das für den Fahrer unangenehme Kupplungsrupfen schrittweise gesteigert werden.

Eine weitere Möglichkeit der erfindungsgemäßen Realisierung sieht eine Deaktivierung der eingeprägten Schwingung vor, wenn eine Reaktion eines Fahrers des Nutzfahrzeugs auf die eingeprägte Schwingung erkannt wird, beispielsweise wenn eine ausreichend große Änderung des Fahrerwunsches erkannt wird. Die Reaktion des Fahrers kann beispielsweise anhand einer Änderung des Fahrpedalwegs, des vom Fahrer angeforderten Motormoments und/oder einer Betätigung einer Bremse des Fahrzeugs durch den Fahrer erkannt werden.

Das Verfahren kann ferner wiederum eine Zwangsschließung der Kupplung vorsehen, wenn keine Reaktion des Fahrers erkannt wird. Vorzugsweise wird nach Ablauf eines vorbestimmten Zeitintervalls nach Einprägung der Schwingung eine Zwangsschließung eingeleitet, wenn der Fahrer nicht auf den Warnhinweis in Form der eingeprägten Schwingung reagiert hat, indem er durch Betätigung des Gaspedals oder der Bremse die kupplungsschädigende Fahrweise beendet. Ferner besteht die Möglichkeit, die Kupplung mit einer parametrierbaren Geschwindigkeit zwangszuschließen, um so die Gefahr des Abwürgens des Motors zu reduzieren.

Die Erfindung betrifft ferner eine Steuerung für eine automatisierte Kupplung eines Nutzfahrzeugs, die eingerichtet ist, das Verfahren, wie hierin offenbart, durchzuführen. Die Erfindung betrifft ferner ein Nutzfahrzeug mit einer solchen Steuerung. Zur Vermeidung von Wiederholungen sollen rein verfahrensgemäß offenbarte Merkmale auch vorrichtungsgemäß offenbart gelten und beanspruchbar sein.

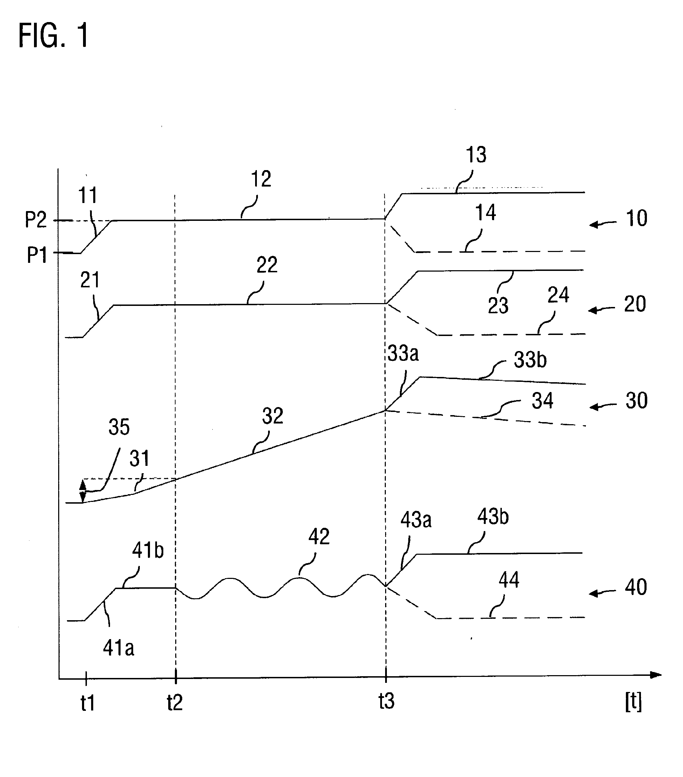

Weitere Einzelheiten und Vorteile der Erfindung werden im Folgenden unter Bezug auf die beigefügte Zeichnung beschrieben. Das Diagramm der Figur 1 illustriert das Einprägen einer Schwingung gemäß einer Ausgestaltungsform der Erfindung.

Die mit dem Bezugszeichen 10 versehene Kurve stellt dabei den Verlauf des Fahrpedalwegs über die Zeit dar. Zum Zeitpunkt t1 betätigt der Fahrer das Fahrpedal, beispielsweise zum Halten des Fahrzeugs an einer Steigung oder zum Rangieren in der Ebene mit einem hohen Gang anstatt eines Rangiergangs. Dadurch steigt der Wert des Fahrpedalwegs von einem Wert P1=0 auf einen Wert P2 von beispielsweise 60% des maximalen Fahrpedalwegs, was durch den Anstieg 11 des Fahrpedalwegs dargestellt ist. Nach Erreichen des Werts P2 hält der Fahrer das Fahrpedal vorerst in dieser Stellung, was dem Abschnitt 12 der Kurve 20 entspricht.

Die mit dem Bezugszeichen 20 versehene Kurve stellt den zeitlichen Verlauf des Motormoments dar. Mit Betätigen des Fahrpedals wird über den Datenbus an die Steuerung des Verbrennungsmotors eine entsprechende Motormomentvorgabe vorgegeben, so dass das Motormoment ebenfalls bis auf einen vorgegebenen Sollwert ansteigt (Abschnitt 21).

Die mit dem Bezugszeichen 40 versehene Kurve stellt den zeitlichen Verlauf des Kupplungsmoments der automatisierten Kupplung des Nutzfahrzeugs dar. Die Kupplungssteuerung wirkt als Drehmomentsteller und stellt entsprechend dem geforderten Soll-Motormoment ein entsprechendes Kupplungsmoment 40 ein, das über die Kupplung zu übertragen ist. Folglich steigt das Kupplungsmoment 41 a nach dem Zeitpunkt t1 bis zu Erreichen eines Sollwerts 41 b an.

Die mit dem Bezugszeichen 30 versehene Kurve stellt den zeitlichen Verlauf der in der Kupplung schlupfbedingt freigesetzten Energie dar. Bei den vorgenannten Situationen des Haltens des Fahrzeugs am Berg oder beim Rangieren in einer Ebene mit großem Gang befindet sich die Kupplung im Schlupf, d. h., es besteht ein Drehzahlunterschied zwischen der Motordrehzahl und der Getriebeeingangsdrehzahl, wodurch in der Kupplung Reibungsenergie freigesetzt wird. Vorstehend wurde bereits erwähnt, dass die in die Kupplung durch Schlupf eingetragene Energie durch zeitliche Integration eines Ausdrucks bestehend aus der aktuellen Differenz zwischen Motordrehzahl und Getriebeeingangsdrehzahl und multipliziert mit dem aktuellen Drehmoment berechnet wird. Nach dem Zeitpunkt t1 steigt die in die Kupplung eingetragene Energie an, dargestellt durch den Kurvenabschnitt 31.

Die in die Kupplung eingetragene Energie (nachfolgend auch als Kupplungsenergie bezeichnet) wird kontinuierlich bestimmt und dadurch überwacht. Die Kupplungssteuerung überwacht dabei, ob ein zuvor festgelegter Kupplungsenergie-Schwellenwert 35 innerhalb eines vorbestimmten Zeitintervalls überschritten wird.

Dieser Kupplungsenergie-Schwellenwert 35 ist vorab experimentell so festgelegt, dass dessen Überschreitung anzeigt, dass eine Beschädigung der Kupplung, beispielsweise durch Überhitzung, droht. In dem in Figur 1 gezeigten Beispiel wird dieser Kupplungsenergie-Schwellenwert zum Zeitpunkt t2 erreicht.

Die als Drehmomentsteller fungierende Kupplungssteuerung ist eingerichtet, bei Überschreiten des Kupplungsenergie-Schwellenwerts eine sinusförmige Schwingung auf das aktuell geforderte Kupplungsmoment 41 b aufzumodulieren. Beispielsweise kann die aufmodulierte Schwingung eine Frequenz im Bereich von 2 bis 6Hz, weiter vorzugsweise im Bereich von 3 bis 5Hz haben. Falls das aktuell geforderte Kupplungsmoment 41b beispielsweise bei 800Nm liegt, kann eine Sinusschwingung mit einer Amplitude in der Größenordnung von beispielsweise +/- 30 bis +/- 50Nm aufmoduliert werden. Vorzugsweise wird die Amplitude der aufmodulierten Schwingung fahrwiderstandsabhängig und/oder übersetzungsabhängig angepasst, so dass auch Amplitudenwerte von +/- 100Nm notwendig sein können. Das Aufmodulieren der Sinusschwingung wird realisiert, indem die Kupplungssteuerung den Kupplungsaktuator so stellt, dass die Kupplung ein wenig auf- und ein wenig zugeht um den aktuell vom Fahrer gewünschten Punkt 41 b, so dass das Kupplungsmoment einen sinusförmigen Verlauf 42 aufweist. Dadurch wird der Triebstrang des Nutzfahrzeugs zu Schwingungen angeregt, was ein rupfartiges Verhalten erzeugt, das für den Fahrer in der Fahrerkabine spürbar ist und von diesem als unangenehm empfunden wird.

Der Fahrer wird dann versuchen, diese für ihn unangenehme Situation aufzulösen, indem er mehr Gas gibt oder indem er vom Gas heruntergeht und die Bremse betätigt. Die Fahrerreaktion erfolgt in dem Beispiel der Figur 1 zum Zeitpunkt t3.

Dabei wird durch die Kurvenabschnitte 13, 23, 33 und 43 die Alternative dargestellt, dass der Fahrer das Gaspedal durchtritt, während durch die Kurvenabschnitte 14, 24, 34 und 44 die Alternative dargestellt ist, dass der Fahrer vom Gas geht. Bis zum Zeitpunkt t3 nimmt somit die in die Kupplung durch Schlupf eingetragene Energie weiter zu, was durch den Kurvenabschnitt 32 dargestellt ist.

Tritt der Fahrer zum Zeitpunkt t3 das Gaspedal gemäß dem Kurvenabschnitt 13 durch, erfolgt eine Erhöhung des geforderten Motormoments 23 sowie ein kurzzeitiger weiterer Anstieg der in die Kupplung eingetragenen Energie 33a sowie des gestellten Kupplungsmoments 43a bis zu dem Zeitpunkt, an dem die Synchrondrehzahl erreicht wird, wonach die in die Kupplung eingetragene Energie nicht weiter zunimmt. Geht der Fahrer dagegen vom Gas gemäß dem Kurvenabschnitt 14, reduzieren sich auch das angeforderte Motormoment 24 und das Kupplungsmoment 44. Der Schlupf wird aufgehoben und die Kupplung außer Eingriff gebracht, so dass die in die Kupplung eingetragene Energie 34 nicht weiter zunimmt. Bedingt durch Abkühleffekte sinkt die Temperatur der Kupplungsscheibe, der Anpressplatte und der Schwungscheibe über die Zeit ab. Ebenso reduziert sich die im System befindliche Energie, was durch den abfallenden Verlauf der Kurvenabschnitte 33b und 34 dargestellt ist.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10-14: Zeitlicher Verlauf Fahrpedalweg
- 21-24: Zeitlicher Verlauf Motormoment
- 30-34: Zeitlicher Verlauf durch Schlupf eingetragener Energie in die Kupplung
- 35: Kupplungsenergie-Schwellenwert
- 40-44: Zeitlicher Verlauf des Kupplungsmoments
- P1: Fahrpedalstellung bei 0% des maximalen Fahrpedalwegs
- P2: Fahrpedalstellung bei 60% des maximalen Fahrpedalwegs

## Patentansprüche

1. Verfahren zur Steuerung einer automatisierten Kupplung eines Nutzfahrzeugs, umfassend:
Bestimmung und Überwachung einer Größe, aus der ein durch Schlupf erzeugter Energieeintrag in die Kupplung ableitbar ist; und
Einprägung einer Schwingung um das aktuell angeforderte Kupplungsmoment, falls die bestimmte und überwachte Größe einen vorbestimmten Wert erreicht.

2. Verfahren nach Anspruch 1, **dadurch gekennzeichnet,**
(a) **dass** die bestimmte und überwachte Größe der durch Schlupf erzeugte Energieeintrag in die Kupplung ist und dass die Schwingung eingeprägt wird, wenn der durch Schlupf erzeugte Energieeintrag in die Kupplung einen vorbestimmten EnergieSchwellenwert überschritten hat; und/oder
(b) **dass** die bestimmte und überwachte Größe die Temperatur der Kupplung ist und dass die Schwingung eingeprägt wird, wenn die Temperatur der Kupplung einen vorbestimmten Temperatur-Schwellenwert überschritten hat.

3. Verfahren nach Anspruch 1 oder 2, **dadurch gekennzeichnet,**
(a) **dass** eine Amplitude der eingeprägten Schwingung fahrsituationsabhängig parametrisiert ist; und/oder
(b) **dass** bei einem Rangiervorgang eine Schwingung mit einer ersten Amplitude und beim Halten des Fahrzeugs an einer Steigung eine Schwingung mit einer zweiten Amplitude eingeprägt wird, wobei die erste Amplitude kleiner als die zweite Amplitude ist.

4. Verfahren nach einem der vorhergehenden Ansprüche, **dadurch gekennzeichnet,**
(a) **dass** eine Frequenz der eingeprägten Schwingung fahrsituationsabhängig parametrisiert ist; und/oder
(b) **dass** bei einem Rangiervorgang eine Schwingung mit einer ersten Frequenz und beim Halten des Fahrzeugs an einer Steigung eine Schwingung mit einer zweiten Frequenz eingeprägt wird, wobei die erste Frequenz kleiner als die zweite Frequenz ist.

5. Verfahren nach einem der vorhergehenden Ansprüche, **dadurch gekennzeichnet, dass** die eingeprägte Schwingung eine Sinusschwingung oder Halbsinusschwingung ist.

6. Verfahren nach einem der vorhergehenden Ansprüche, **dadurch gekennzeichnet, dass** vor der Einprägung der Schwingung eine Reduzierung eines aktuellen Kupplungsmoments durchgeführt wird, um eine ungewollte Beschleunigung zu verhindern.

7. Verfahren nach einem der vorhergehenden Ansprüche, **dadurch gekennzeichnet, dass** die Schwingung, vorzugsweise fahrsituationsabhängig, mit ansteigender Amplitude eingeprägt wird.

8. Verfahren nach einem der vorhergehenden Ansprüche, **gekennzeichnet durch** eine Deaktivierung der eingeprägten Schwingung, wenn eine Reaktion eines Fahrers des Nutzfahrzeugs auf die eingeprägte Schwingung erkannt wird.

9. Verfahren nach Anspruch 8, **dadurch gekennzeichnet, dass** die Reaktion des Fahrers anhand einer Änderung des Fahrpedalwegs, des vom Fahrer angeforderten Motormoments und/oder einer Betätigung einer Bremse des Fahrzeugs durch den Fahrer erkannt wird.

10. Verfahren nach einem der Ansprüche 8 oder 9, **gekennzeichnet durch** eine Zwangsschließung der Kupplung, wenn keine Reaktion des Fahrers erkannt wird.

11. Steuerung für eine automatisierte Kupplung eines Nutzfahrzeugs, die eingerichtet ist, das Verfahren gemäß einem der Ansprüche 1 bis 10 durchzuführen.

12. Nutzfahrzeug mit einer Steuerung nach Anspruch 11.
